# EUROPEAN PATENT APPLICATION

(11) **EP 4 304 062 A1**
(43) Date of publication of application: **10.01.2024**
(21) Application number: 22780046.3
(22) Date of filing: 14.03.2022
(51) Int. Cl.: H02K 15/03, H02K 21/22, H02K 1/2786

(54) **OUTER ROTOR AND OUTER ROTOR ELECTRIC MOTOR**

(30) Priority: 30.03.2021 JP 2021057624; 22.09.2021 JP 2021154690
(71) Applicant: Aichi Steel Corporation, Tokai-shi, Aichi 476-8666 (JP)
(72) Inventor: FUJIMAKI, Tadashi, Tokai-shi, Aichi 476-8666 (JP)
(74) Representative: Barker Brettell LLP
(86) International application number: PCT/JP2022/011379
(87) International publication number: WO 2022/209825

(57) **Abstract**

Provided is an outer rotor, in which an anchor part is provided with a first bulge portion bulging in one direction of rotation directions beyond a first generating line and a second bulge portion bulging in the other direction of the rotation directions beyond a second generating line. This makes it possible to inhibit shrinkage of a binder toward a rotation center. Strain resulting from shrinkage of a magnet part can be distributed over its outer peripheral side and inner peripheral side with the first bulge portion and the second bulge portion therebetween, and thus, occurrence of cracks in the magnet part can be inhibited in the vicinity of the anchor part.

## Description

### CROSS-REFERENCE TO RELATED APPLICATIONS

This international application claims the benefit of Japanese Patent Application No. 2021-057624 filed on March 30, 2021 with the Japan Patent Office and Japanese Patent Application No. 2021-154690 filed on September 22, 2021 with the Japan Patent Office, and the entire disclosures of Japanese Patent Application No. 2021-057624 and Japanese Patent Application No. 2021-154690 are incorporated by reference in this international application.

### TECHNICAL FIELD

The present disclosure relates to an outer rotor of an electric motor.

### BACKGROUND ART

For example, an outer rotor disclosed in Patent Document 1 includes a substantially cylindrical rotor core formed of metal, a substantially cylindrical magnet part arranged inside the rotor core, and so on.

Provided on an inner peripheral surface of the rotor core are multiple anchor parts protruding toward a rotation center of the rotor core. Each anchor part is a locking part for inhibiting the magnet part from being displaced relative to the rotor core in its circumferential direction and in its rotation axis direction.

The magnet part is a permanent magnet configured with a bond magnet molded into a specified shape. The bond magnet is a mixture of fine magnet powder and a resin binder, and is molded into the specified shape by an injection molding method or another method.

### PRIOR ART DOCUMENTS

### PATENT DOCUMENTS

Patent Document 1: JP 2016-111738 A

### SUMMARY OF THE INVENTION

### PROBLEMS TO BE SOLVED BY THE INVENTION

The magnet part is molded by injection of the binder (resin) in a molten state. Thus, shrinkage of the binder (resin) that occurs after the injection molding tends to cause cracks in the magnet part.

The present disclosure discloses an example of an outer rotor that can inhibit occurrence of cracks in a magnet part.

### MEANS FOR SOLVING THE PROBLEMS

An outer rotor of an electric motor according to one aspect of the present disclosure comprises: a rotor core that is formed of metal and that has an annular shape; an anchor part that is provided on an inner peripheral surface of the rotor core and that protrudes toward a rotation center axis of the rotor core; a magnet part provided on the inner peripheral surface of the rotor core and formed of a bond magnet, the magnet part being formed in an annular shape to cover an entirety of the anchor part from a side of the inner peripheral surface; a first bulge portion that is provided to the anchor part and that bulges in one direction of rotation directions; and a second bulge portion that is provided to the anchor part and that bulges in another direction of the rotation directions. The magnet part is present on one side and another side of the first bulge portion across the first bulge portion in a direction of a first generating line, and the magnet part is present on one side and another side of the second bulge portion across the second bulge portion in a direction of the second generating line.

In the present disclosure, a virtual plane refers to a virtual plane orthogonal to the rotation center axis of the rotor core. The first generating line refers to a virtual line that passes through the rotation center axis projected onto the virtual plane (hereinafter referred to as a "rotation center") and that is shifted relative to an anchor center line in one direction of the rotation directions by a central angle set in advance to intersect the first bulge portion.

The second generating line refers to a virtual line that passes through the rotation center and that is shifted relative to the anchor center line in another direction of the rotation directions by a central angle set in advance to intersect the second bulge portion.

An anchor center refers to a centroid of a figure representing an outer border of the anchor part projected onto the virtual plane. The centroid is a point at which the moment of area (also referred to as "geometrical moment of area") is balanced in the outer border of the anchor part projected onto the virtual plane.

Since the outer rotor is provided with the first bulge portion bulging in the one direction of the rotation directions beyond the first generating line and the second bulge portion bulging in the another direction of the rotation directions beyond the second generating line, shrinkage of a binder toward the rotation center axis can be inhibited.

This makes it possible to distribute strain resulting from the shrinkage of the magnet part over its outer peripheral side (outer side in the radial direction) and its inner peripheral side (inner side in the radial direction) with the first bulge portion and the second bulge portion therebetween. Resultantly, the outer rotor makes it possible to inhibit occurrence of cracks in the magnet part.

### BRIEF DESCRIPTION OF THE DRAWINGS

FIG. 1 is a diagram showing an outer rotor of a first embodiment.
FIG. 2 is an end view of the outer rotor of the first embodiment.
FIG. 3 is a partial enlarged view of the outer rotor of the first embodiment.
FIG. 4 is an end view of an outer rotor of a second embodiment.
FIG. 5 is a partial enlarged view of the outer rotor of the second embodiment.
FIG. 6 is a partial enlarged view of a rotor core of the second embodiment.
FIG. 7 is a partial enlarged view of a rotor core of another embodiment.

### EXPLANATION OF REFERENCE NUMERALS

1...outer rotor, 3...rotor core, 5...magnet part, 7...anchor part, 7A...first bulge portion, 7B... second bulge portion

### MODE FOR CARRYING OUT THE INVENTION

Embodiments below show examples of embodiments that belong to the technical scope of the present disclosure. That is, the invention-specifying matters and so on recited in the appended claims are not limited by specific configurations, structures, and the like indicated in the below-described embodiments.

Arrows indicating directions, hatched lines, and so on shown in the drawings are provided to facilitate understanding of mutual relationships between the drawings and the shape of each member or portion. Thus, the invention indicated by the present disclosure is not limited by the directions shown in the drawings. The drawing with hatched lines is not necessarily a sectional view.

At least a member or portion described with a reference numeral is at least one in number. That is, such a member may be two or more in number unless it is accompanied by conditional words, such as "only one". The outer rotor indicated by the present disclosure includes at least an element such as the member or portion described with a reference numeral, and a structural portion shown in the drawings.

### [First Embodiment]

### <1. Overview of Outer Rotor>

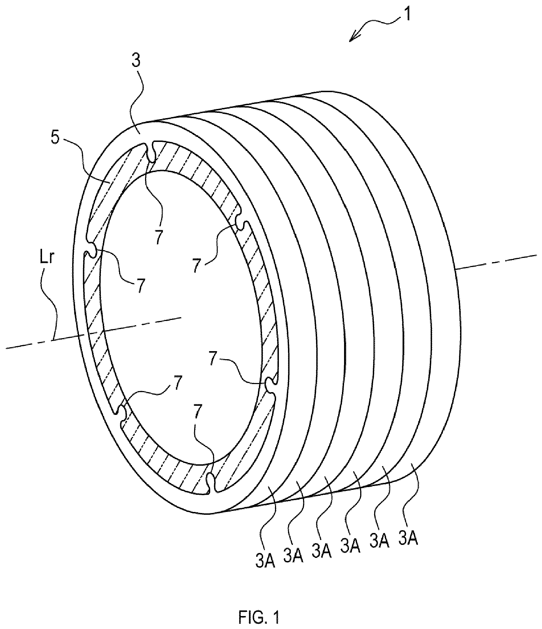

The present embodiment is an example in which an outer rotor of the present disclosure is applied to an outer rotor of a starting electric motor for an internal combustion engine, such as a starter motor. As shown in FIG. 1, an outer rotor 1 comprises a rotor core 3, a magnet part 5, and so on. The magnet part 5 is a part hatched with two-dot chain lines in FIG. 1.

The rotor core 3 is a member located on an outer peripheral side of the magnet part 5, and is a substantially cylindrical member formed of metal. Specifically, the rotor core 3 is formed in a cylindrical shape by layering multiple steel plates 3A with low iron loss, such as magnetic steel plates, in a direction parallel to a rotation center axis Lr of the rotor core 3.

The magnet part 5 is a substantially cylindrical member arranged on an inner side of the rotor core. The magnet part 5 is a bond magnet molded into a specified shape. The bond magnet is a mixture of fine magnet powder and a resin binder, and is a permanent magnet molded into a substantially cylindrical shape by an injection molding method or another method.

Provided on an inner peripheral surface of the rotor core 3 are multiple anchor parts 7 protruding toward the rotation center axis Lr. Each anchor part 7 is a locking part for inhibiting displacement of the magnet part 5 relative to the rotor core 3 in a circumferential direction and in a direction of the rotation center axis Lr (hereinafter referred to as an "axial direction").

Each anchor part 7 is a part formed integrally with the rotor core 3. In other words, each anchor part 7 is a part formed by pressing integrally with the corresponding steel plate 3A forming the rotor core 3. Thus, the anchor parts 7 form a ridge extending in the axial direction. The multiple anchor parts 7 are provided at regular intervals along the circumferential direction.

### <2. Details of Outer Rotor>

### <Details of Anchor Part>

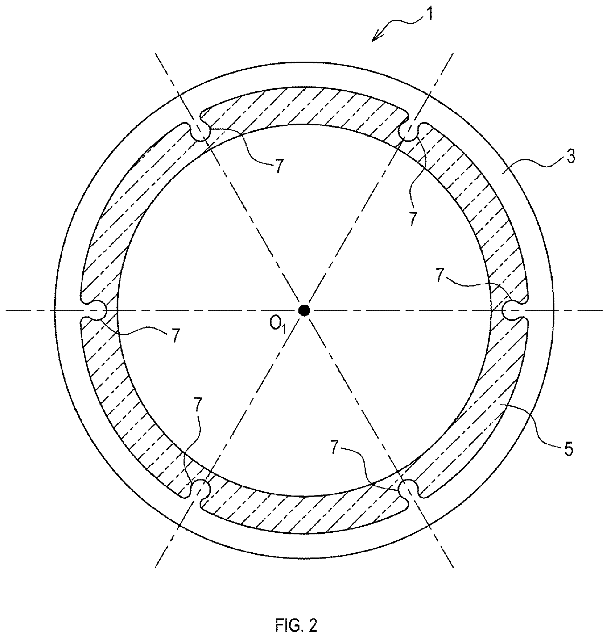

FIG. 2 shows the outer rotor 1 projected onto a virtual plane orthogonal to the rotation center axis Lr. Specifically, FIG. 2 is equivalent to an axial end view of the outer rotor 1 shown in FIG. 1. The rotation center axis Lr projected onto the virtual plane is hereinafter referred to as a rotation center O1.

The rotor core 3 projected onto the virtual plane (hereinafter, simply referred to as "the rotor core 3") is formed in a substantially annular shape as shown in FIG. 2. The anchor part 7 projected onto the virtual plane (hereinafter, simply referred to as "the anchor part 7") is a protrusion-shaped part protruding toward the rotation center O1 on the inner peripheral surface of the rotor core 3.

The magnet part 5 projected onto the virtual plane (hereinafter, simply referred to as "the magnet part 5") is provided on the inner peripheral surface of the rotor core 3, and is formed in a substantially annular shape so as to cover the entirety of each anchor part 7 from a side of the inner peripheral surface.

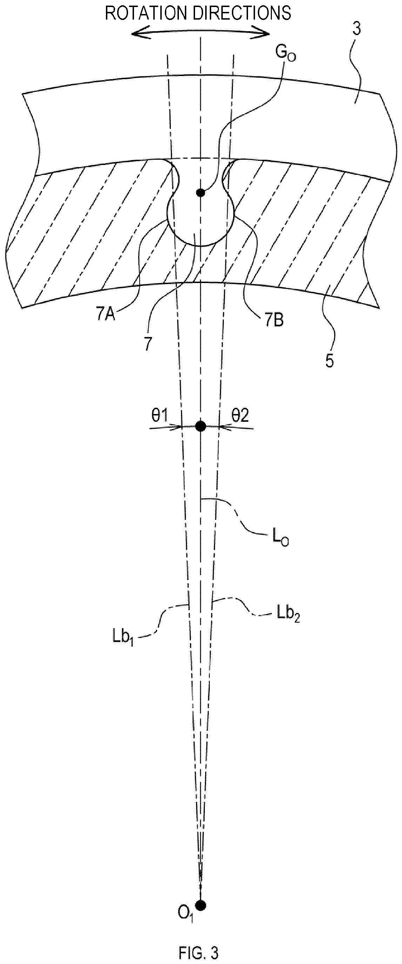

As shown in FIG. 3, one side face of each anchor part 7 is provided with a first bulge portion 7A, and the other side face of the anchor part 7 is provided with a second bulge portion 7B. The side faces of the anchor part 7 refer to end faces in a direction perpendicular to a protruding direction of the anchor part 7 and to the axial direction, that is, end faces in rotation directions of the outer rotor 1.

Accordingly, each first bulge portion 7A is a portion bulging from the anchor part 7 provided with such first bulge portion 7A in one direction of the rotation directions, and each second bulge portion 7B is a portion bulging from the anchor part 7 provided with such second bulge portion 7B in the other direction of the rotation directions.

Each first bulge portion 7A and the corresponding second bulge portion 7B are portions formed integrally with the corresponding anchor part 7. Specifically, the first bulge portion 7A, the second bulge portion 7B, and the anchor part 7 are portions formed by pressing integrally with the corresponding steel plate 3A forming the rotor core 3.

### <Details of First Bulge Portion and Second Bulge Portion>

As shown in FIG. 3, the magnet part 5 is present on one side and the other side of the first bulge portion 7A across the first bulge portion 7A in a direction of a first generating line Lb1, and the magnet part 5 is present on one side and the other side of the second bulge portion 7B across the second bulge portion 7B in a direction of a second generating line Lb2.

In other words, in FIG. 3, the magnet part 5 is present on the sheet upper side and the sheet lower side relative to the first bulge portion 7A, and the magnet part 5 is present on the sheet upper side and the sheet lower side relative to the second bulge portion 7B. The definitions of the first generating line Lb1 and the second generating line Lb2 are as below.

### <Definitions of Terms>

The first generating line Lb1 refers to a virtual line that passes through the rotation center O1 and that is shifted relative to an anchor center line Lo in one direction of the rotation directions by a central angle θ1 set in advance, and the virtual line intersects the first bulge portion 7A.

The second generating line Lb2 refers to a virtual line that passes through the rotation center O1 and that is shifted relative to the anchor center line Lo in the other direction of the rotation directions by a central angle θ2 set in advance, and the virtual line intersects the second bulge portion 7B.

The anchor center line Lo refers to a virtual line that passes through an anchor center Go and the rotation center O1. The anchor center Go refers to a centroid of a figure representing an outer border of the anchor part 7. The centroid refers to a point at which a geometrical moment of area is balanced in the outer border of the anchor part 7.

### <3. Features of Outer Rotor of the Present Embodiment>

Each anchor part 7 of the outer rotor 1 of the present embodiment is provided with the first bulge portion 7A bulging in one direction of the rotation directions beyond the first generating line Lb1 and the second bulge portion 7B bulging in the other direction of the rotation directions beyond the second generating line Lb2 (see FIG. 3).

Accordingly, shrinkage of the binder toward the rotation center axis Lr can be inhibited by the first bulge portion 7A and the second bulge portion 7B. This makes it possible to distribute strain resulting from the shrinkage of the magnet part 5 over its outer peripheral side and inner peripheral side with the first bulge portion 7A and the second bulge portion 7B therebetween. Resultantly, such an outer rotor 1 makes it possible to inhibit occurrence of cracks in the magnet part 5.

Particularly, occurrence of cracks from the inner peripheral side of the magnet part 5 can be inhibited. Moreover, occurrence of cracks in the magnet part 5 can be inhibited in the vicinity of the anchor part 7.

### [Second Embodiment]

In the outer rotor 1 of the above-described embodiment, a thickness dimension of the magnet part 5 is uniform over the entire area in a circumferential direction with the exception of portions where the anchor parts 7 are provided. The thickness dimension refers to a dimension that is measured from an inner peripheral surface of the magnet part 5 to an outer peripheral surface of the magnet part 5 and that is a dimension of a portion parallel to a radial direction.

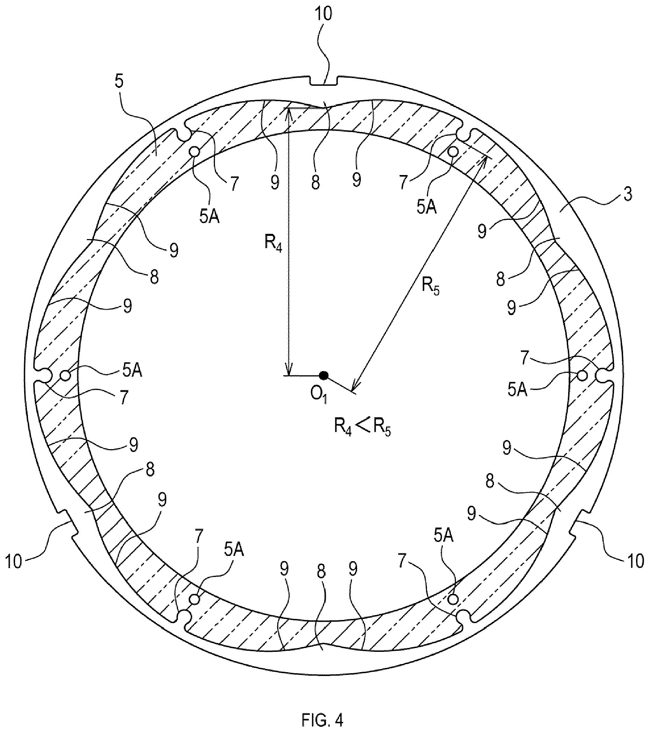

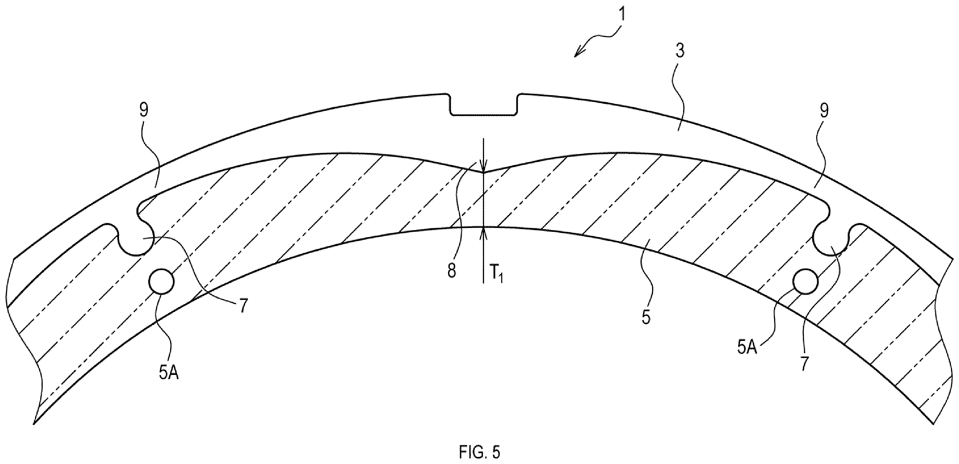

In contrast, in the outer rotor 1 of the present embodiment, as shown in FIG. 4, the thickness dimension of the magnet part 5 varies depending on a position. Specifically, a thickness dimension T1 (see FIG. 5) of the magnet part 5 at a middle position between the two anchor parts 7 adjacent to each other along the circumferential direction is smaller than the thickness dimensions at any other positions.

In other words, a mountain portion 8 protruding toward the rotation center O1 is provided in a portion corresponding to the above-described middle position between the anchor parts 7 in the rotor core 3. Thus, the present embodiment has a configuration in which the multiple mountain portions 8 are provided at regular intervals along the circumferential direction.

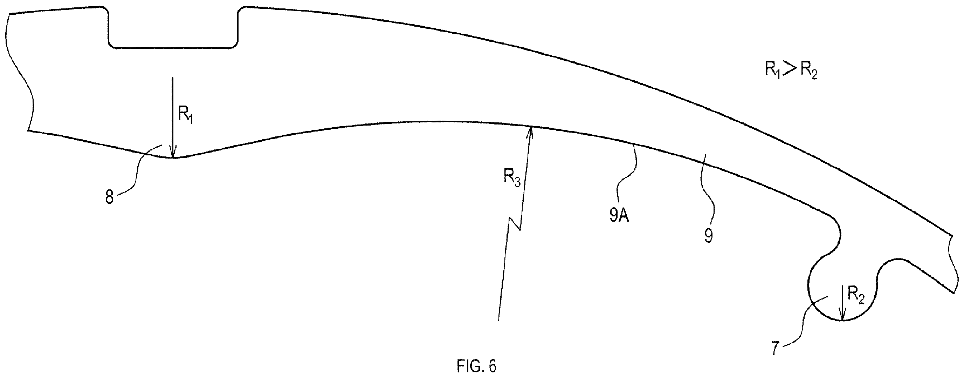

In the inner peripheral surface of the rotor core 3, a valley portion 9 recessed toward the outer peripheral surface of the rotor core 3 is provided between the two mountain portions 8 adjacent to each other along the circumferential direction. As shown in FIG. 6, a radius of curvature R1 at the top of each mountain portion 8 is larger than a radius of curvature R2 at the top of the anchor part 7.

The radius of curvature R1 at the top of each mountain portion 8 is smaller than a radius of curvature R3 of an arc portion 9A forming a recess of each valley portion 9. Moreover, as shown in FIG. 4, a dimension R4 from the top of each mountain portion 8 to the rotation center O1 is smaller than a dimension R5 from the top of the anchor part 7 to the rotation center O1.

At least one recessed portion 10 (two or more recessed portions 10 in the present embodiment) is provided on an outer periphery of the rotor core 3. Specifically, each recessed portion 10 is provided at a portion corresponding to any of the mountain portions 8, in the outer periphery of the rotor core 3.

Each recessed portion 10 is a portion recessed in a direction toward the inner peripheral surface of the rotor core 3. Each recessed portion 10 of the present embodiment is a groove-shaped recess extending in a direction parallel to the rotation center axis Lr. In the magnet part 5, a gate trace 5A indicating an injection opening for the bond magnet is present at each position corresponding to the top of the anchor part 7.

### <Features of Outer Rotor of the Present Embodiment>

In the present embodiment, the thickness dimension T1 of the magnet part 5 at the middle position between the two anchor parts 7 adjacent to each other along the circumferential direction is smaller than the thickness dimensions at any other positions. Accordingly, stress concentration in the vicinity of the anchor part 7 can be avoided. Resultantly, cracking in the magnet part 5 can be inhibited.

In other words, the anchor part 7 is located in the valley portion 9, which is a middle position between the two adjacent mountain portions 8. In the valley portion 9, the magnet part 5 has the largest thickness and exhibits large molding shrinkage to cause increased strain inside the magnet. Therefore, the valley portion 9 is liable to crack originally.

In the present embodiment, however, provision of the anchor part 7 reduces the strain caused inside the magnet, thereby avoiding stress concentration effectively. Resultantly, cracking in the magnet part 5 can be inhibited.

A boundary between magnetic poles in the present embodiment is set at the middle position between the two anchor parts 7 adjacent to each other along the circumferential direction, and the thickness dimension T1 of the magnet part 5 at the middle position is smaller than the thickness dimensions at any other positions.

Since a magnetic force near the boundary between the magnetic poles is unlikely to contribute to the rotation of the outer rotor 1, the configuration in which the thickness of the magnet part 5 at the middle position between the anchor parts 7 is small as in the present embodiment makes it possible to reduce the amount of magnet used while maintaining rotation torque.

In the present embodiment, the radius of curvature R1 at the top of the mountain portion 8 is larger than the radius of curvature R2 at the top of the anchor part 7. This makes it possible to avoid occurrence of stress concentration in the vicinity of the mountain portion 8.

In the present embodiment, occurrence of stress concentration in the vicinity of the mountain portion 8 can be avoided while securing the magnetic force near the valley portion 9.

In the present embodiment, the dimension R4 from the top of the mountain portion 8 to the rotation center O1 is smaller than the dimension R5 from the top of the anchor part 7 to the rotation center O1. This makes it easier to secure the magnetic force near the valley portion 9.

In the present embodiment, the gate trace 5A indicating the injection opening for the bond magnet is present at each position corresponding to the top of the anchor part 7 in the magnet part 5. This may make it possible to avoid locating a weld portion in a position where cracks are likely to occur, that is, a position where stress tends to concentrate. The weld portion refers to a portion where the bond magnet injected through different injection openings join together.

### [Other Embodiments]

The anchor part 7 of the above-described embodiments has a line-symmetric shape with respect to the anchor center line Lo, and the central angle θ1 and the central angle θ2 are the same as each other. However, the present disclosure is not limited to this. Specifically, in the present disclosure, for example, the anchor part 7 may have an asymmetric shape with respect to the anchor center line Lo, or the central angle θ1 and the central angle θ2 may have values different from each other.

In the above-described embodiments, the multiple anchor parts 7 are provided. However, the present disclosure is not limited to this. Specifically, in the present disclosure, for example, it is sufficient that the anchor part 7 is at least one in number. In other words, the number of the anchor part 7 is not limited to that shown in FIG. 2.

The outer rotor 1 of the above-described embodiments is for use in the starting electric motor. However, the present disclosure is not limited to this. Specifically, the present disclosure is applicable to other electric motors, such as a wiper motor and a power window motor, for example.

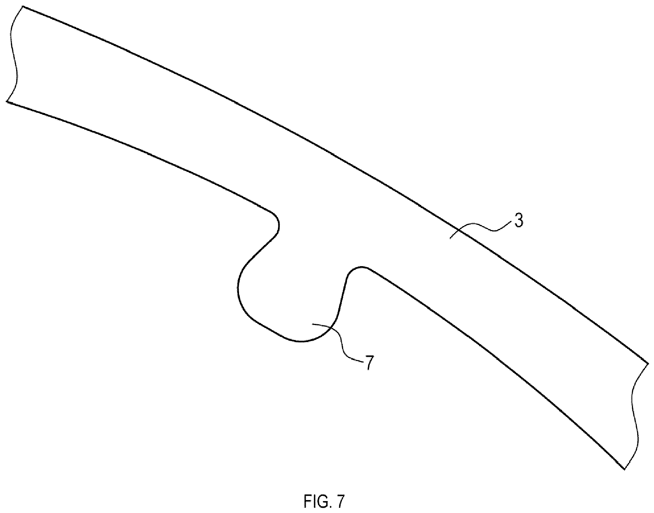

The anchor part 7 of the above-described embodiments has a shape obtained by combining arcs as shown in FIG. 3. However, the present disclosure is not limited to this. Specifically, in the present disclosure, the anchor part 7 may have a shape obtained by, for example, combining arcs and straight lines as shown in FIG. 7.

Moreover, it is sufficient that the present disclosure is consistent with the gist of the disclosure indicated by the above-described embodiments, and the present disclosure is not limited to the above-described embodiments. Accordingly, the present disclosure may take a configuration in which at least two embodiments of the above-described embodiments are combined together, or a configuration in which any of the diagrammatically-shown constituent elements or the constituent elements described with reference numerals in the above-described embodiments is omitted.

## Claims

1. An outer rotor of an electric motor, the outer rotor comprising:
a rotor core that is formed of metal and that has an annular shape;
an anchor part that is provided on an inner peripheral surface of the rotor core and that protrudes toward a rotation center axis of the rotor core;
a magnet part provided on the inner peripheral surface of the rotor core and formed of a bond magnet, the magnet part being formed in an annular shape to cover an entirety of the anchor part from a side of the inner peripheral surface;
a first bulge portion that is provided to the anchor part and that bulges in one direction of rotation directions; and
a second bulge portion that is provided to the anchor part and that bulges in another direction of the rotation directions,
wherein, when definitions are given of:
a centroid of the anchor part projected onto a virtual plane orthogonal to a rotation center axis of the rotor core, as an anchor center,
a virtual line passing through the anchor center and the rotation center axis projected onto the virtual plane, as an anchor center line,
a virtual line that passes through the rotation center axis projected onto the virtual plane and that is shifted relative to the anchor center line in the one direction of the rotation directions by a central angle set in advance to intersect the first bulge portion, as a first generating line, and
a virtual line that passes through the rotation center axis projected onto the virtual plane and that is shifted relative to the anchor center line in another direction of the rotation directions by a central angle set in advance to intersect the second bulge portion, as a second generating line,
the magnet part is present on one side and another side of the first bulge portion across the first bulge portion in a direction of the first generating line, and
the magnet part is present on one side and another side of the second bulge portion across the second bulge portion in a direction of the second generating line.

2. The outer rotor according to claim 1,
wherein the anchor part comprises multiple anchor parts provided at regular intervals along a circumferential direction, and
wherein, when a dimension that is measured from an inner peripheral surface of the magnet part to an outer peripheral surface of the magnet part and that is a dimension of a portion parallel to a radial direction is defined as a thickness dimension, the thickness dimension at a middle position between two anchor parts of the multiple anchor parts adjacent to each other along the circumferential direction is smaller than the thickness dimensions at any other positions.

3. The outer rotor according to claim 2,
wherein a mountain portion protruding toward the rotation center axis is provided in a portion corresponding to the middle position in the rotor core, and
wherein a radius of curvature at a top of the mountain portion is larger than a radius of curvature at a top of the anchor part.

4. The outer rotor according to claim 3,
wherein the mountain portion comprises multiple mountain portions, and in the inner peripheral surface of the rotor core, a valley portion recessed toward an outer peripheral surface of the rotor core is provided between two mountain portions of the multiple mountain portions adjacent to each other along the circumferential direction, and
wherein the radius of curvature at the top of the mountain portion is smaller than a radius of curvature of an arc portion forming a recess of the valley portion.

5. The outer rotor according to claim 3 or 4,
wherein a dimension from the top of the mountain portion to the rotation center axis is smaller than a dimension from the top of the anchor part to the rotation center axis.

6. The outer rotor according to any one of claims 2 to 5,
wherein a gate trace indicating an injection opening for the bond magnet is present at each position corresponding to the top of each of the multiple anchor parts in the magnet part.

7. The outer rotor according to any one of claims 3 to 5,
wherein a recessed portion recessed in a direction toward the inner peripheral surface of the rotor core is provided at a portion corresponding to any of the multiple mountain portions, in an outer periphery of the rotor core.

8. An outer rotor electric motor comprising:
an outer rotor according to any one of claims 1 to 7; and
an inner stator arranged within the outer rotor.
